# EUROPEAN PATENT APPLICATION

(11) **EP 2 604 396 A1**
(43) Date of publication of application: **19.06.2013**
(21) Application number: 12196804.4
(22) Date of filing: 12.12.2012
(51) Int. Cl.: B25J 13/00, H04J 14/02

(54) **A remote intervention system**

(30) Priority: 13.12.2011 FR 1161525
(71) Applicant: Alcatel Lucent, 75007 Paris (FR)
(72) Inventor: Garreau, Alexandre, 91460 MARCOUSSIS (FR)
(74) Representative: Sciaux, Edmond

(57) **Abstract**

The object of the present invention is a remote intervention system comprising a control station connected to at least one means of relaying by at least one cable transporting electrical power and a downlink multiplexed optical signal . The means of relaying comprises a means of extracting at least one downlink optical signal from the downlink multiplexed optical signal, one means of converting the downlink optical signal into a radio signal, and one means of transmitting the radio signal to the remote-controlled robotic device. The means of relaying further comprises a means of receiving at least one radio signal from a remote-controlled robotic device, a means of converting the radio signal into an uplink optical signal and a means of inserting the uplink optical signal into an uplink multiplexed optical signal. The remote-controlled robotic device comprises a means of transmitting/receiving at least one radio signal to the means of relaying.

## Description

The present invention pertains to a remote intervention system. Such a system is advantageously capable of substituting for human presence in order to be put to use in areas that pose major risks.

In remote intervention systems currently in service, the low capacity of remote control devices such as robots or automated machines, both in terms of communications and power, limits their usage. However, they are essential and make it possible to replace humans in critical conditions.

In particular, for usage in the nuclear sector, one company has designed a fleet of robotic machines intended for interventions performed outdoors. The intervention system mainly comprises three subsystems: a control station or central transmission station (PCT) installed in a non-hostile area that houses the technicians who operate the robotic machine. The central transmission station is connected to a means of relaying, for example one using optical fiber, over a distance that does not exceed five kilometers. The antenna-equipped means of relaying is intended to improve radio coverage for the remote control of a robot working in a hostile area. The robotic device may thereby be controlled from a distance up to ten kilometers away by the antenna-equipped means of relaying. Controlled by radio, the robot placed at the end of the chain performs on-site work. The current battery life is assessed at 100 hours for the control station, 80 hours for the means of relaying, and 10 hours for the robot, respectively. There are also other types of remote-controlled automated machines intended to intervene within premises, and whose battery life is less, on the order of 4 to 7 hours.

The purpose of the present invention is to propose a remote intervention system in which the intervention time is considerably increased compared to the known system.

It is also a purpose of the invention to present a remote intervention system that allows a plethora of robotic devices, remotely controlled by a means of relaying, which are able to intervene within a hazardous area, while retaining total control over their work.

It is a further purpose of the invention to propose a remote intervention system that makes it possible to keep the control elements located at the end of the chain, such as a robotic device, including in the event that the distance that separates it from the means of relaying directly connected to the control station by a cable is much longer than the distance that allows remote control by a radio/wireless link, particularly due to the environment (disruption due to radioactivity, electromagnetic shielding or the presence of water).

The object of the present invention is a remote intervention system comprising a control station, at least one means of relaying, and at least one remote-controlled robotic device, wherein
- the control station is connected to the means of relaying by at least one cable carrying electrical power, a downlink multiplexed optical signal and an uplink multiplexed optical signal,
- the means of relaying comprises a means of extracting at least one downlink optical signal from the downlink multiplexed optical signal, one means of converting the downlink optical signal into a radio signal, and one means of transmitting the radio signal to the remote-controlled robotic device,
- the means of relaying further comprises a means of receiving at least one radio signal from the remote-controlled robotic device, a means of converting the radio signal into an uplink optical signal, and a means of inserting at least one uplink optical signal into an uplink multiplexed optical signal,
- the remote-controlled robotic device comprises a means of transmitting/receiving at least one radio signal to the means of relaying.

According to one preferential aspect, the means of relaying comprises a means suitable to allow the electrical powering of a remote-controlled robotic device. The remote-controlled robotic device may thereby recharge its batteries from relay modules, which leads to very high savings, particularly in terms of energy consumption and time.

According to another aspect, if the wavelength of the extracted downlink optical signal is the same as the wavelength of the inserted uplink optical signal, the wavelength may be defined by the control station, and thereby be easily modified. In the opposite case, in which the wavelength of the extracted downlink optical signal is different from the wavelength of the inserted uplink optical signal, those wavelengths are assigned by design to the corresponding relay module.

According to another preferential aspect, the means of relaying comprises a plurality of relay modules, each relay module being capable of cooperating with at least one remote-controlled robotic device. The relay modules may particularly be connected by a cable.

In one variant, relay modules are connected in series. In another variant, relay modules are connected in parallel. Naturally, the remote intervention system may simultaneously comprise serially-connected relay modules and parallel-connected relay modules so as to create a tree structure. The relay modules may thereby be deployed in the field in order to occupy the largest possible area.

According to another aspect, the remote-controlled robotic device comprises a means for disconnecting from the relay module that controls it and a means for connecting to another relay module, based on received information.

According to yet another aspect, the means of relaying is capable of coordinating tasks to be performed by a plurality of remote-controlled robotic devices.

Each relay module defines a telecommunications cell for the remote-controlled robotic device with which it cooperates. The relay module may also control multiple remote-controlled robotic devices.

The advantage of this remote intervention system is to make it possible to operate remote-controlled robotic devices either in isolation or "in teams", meaning simultaneously and in a synchronized fashion in order to combine their capabilities. This teamwork may be made up of different tasks or of similar tasks carried out by the remote-controlled robotic devices involved in this work. First, it may be necessary to have a single task performed by multiple remote-controlled robotic devices so as to combine their work capabilities, such as for lifting certain heavy structures, which could not be done by just one remote-controlled robotic device. Additionally, it may be necessary to be able to simultaneously perform different tasks such as measurement, using a tool, or fully or partially protecting a remote-controlled robotic device during a particularly sensitive operation. In such a case, each remote-controlled robotic device may carry out its own task, which is different from that of the other associated remote-controlled robotic devices. Furthermore, the remote-controlled robotic devices may recharge their power from the easiest-to-access relay module, e.g. the closest one. This may be the relay module that belongs to its own telecommunication cell, or a relay module to which the remote-controlled robotic device becomes temporarily assigned.

According to one preferred embodiment, the control station is connected to the means of relaying by at least one cable comprising at least one optical fiber surrounded by at least one layer of a conductive material for carrying high-voltage electrical power, and in that the means of relaying comprises an appropriate means for allowing the electrical powering of at least one remote-controlled robotic device.

This remote intervention system is applicable for indoor or outdoor, land-based or sea-based uses.

According to one variant embodiment, the remote intervention system further comprises a moving section capable of successively connecting to a first relay module in order to receive electrical power, and to a second relay module in order to transfer the received electrical power to it.

According to another variant embodiment, the moving section is further capable of successively connecting to a first relay module in order to receive data and to a second relay module in order to transfer the received data to it.

Other characteristics and advantages of the present invention will become apparent upon reading the following description of one embodiment, which is naturally given by way of a non-limiting example, and in the attached drawing, in which:
- Figure 1 depicts a first embodiment of a remote intervention system,
- Figure 2 depicts a second embodiment of a remote intervention system in a stowed configuration,
- Figure 3 depicts a third embodiment of the intervention system in a deployed configuration,
- Figure 4 depicts a fourth embodiment of the remote intervention system in a deployed configuration,
- Figures 5a and 5b schematically depict a relay module showing the links in the remote intervention system,
- Figures 6a and 6b depict a fifth embodiment of the remote intervention system.

Identical elements in each of these figures have the same reference numbers.

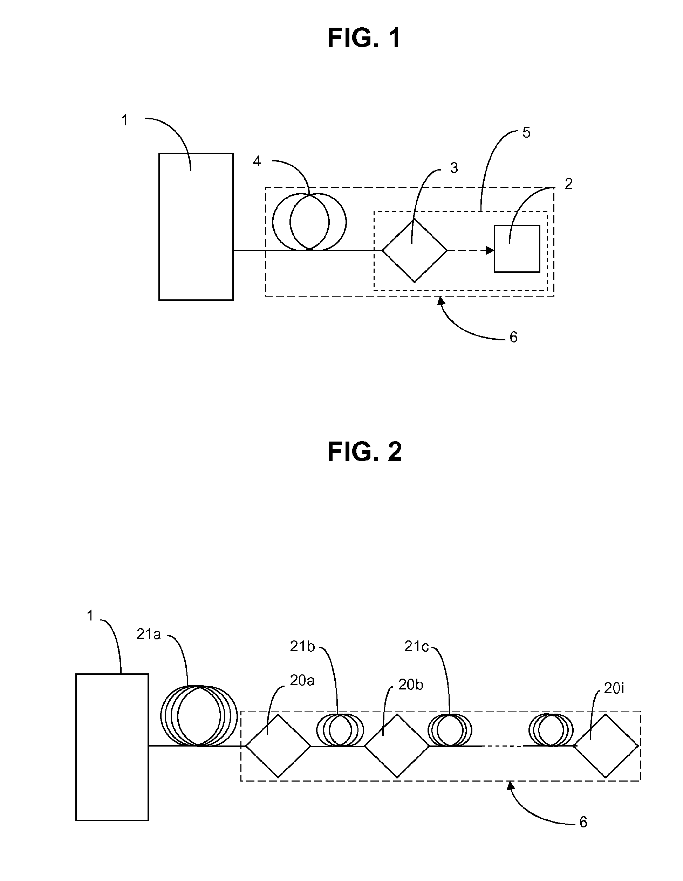

In the embodiment depicted schematically in Figure 1, the remote intervention system comprises a control station **1.** The control station **1,** whether fixed or mobile, is located outside of the hostile area **6.** In the control station are the personnel dedicated to the control and operation of the remote-controlled robotic devices **2.** The link between the control station **1** and the means of relaying, such as a relay module **3,** is provided by a cable **4** whose length may be between 0 Km and 100 Km. The relay module **3** and/or the remote-controlled robotic devices **2** that are associated with it are placed within the work area, which may be an environment hostile to humans, and form a telecommunication cell **5.** There is always the risk that the information may degrade when going from a radio transmitter to a radio receiver, for example due to noise generated by radioactivity. Connection by a fiber-optic cable between the control station **1** placed outside the hostile area and the means of relaying **3** placed within the hostile area is therefore essential for reliably and completely transmitting data within an environment that disrupts purely radio/wireless communications, such as a radioactive environment. Furthermore, the cable allows the simultaneous transport of power.

The cable **4,** whether on land or undersea, is capable of simultaneously transporting data and power. For example, the cable **4** may be a coaxial cable comprising a core comprising an optical fiber, or a bundle of optical fibers, surrounded by at least one layer of an electrically conductive material. In order to bypass disruptions, such as those due to ionizing radiation, the optical fiber conducts optical signals that allow communication between the control station **1** and the remote-controlled robotic device **2** via the relay module **3.** The length of the cable **4** may reach 100 km, without the optical signal requiring the use of a repeater. The outside conductor of the cable **4** is intended to provide high-voltage electrical power to the relay module **3.** The relay module **3** is therefore in a permanent electrical and optical link with the control station **1.** The relay module **3** is thereby capable of electrically powering the remote-controlled robotic device **2,** which may periodically recharge its batteries there using a charger with or without contact, such as a simple adapted electrical outlet or through induction. This providing of unlimited power contributes to considerably increasing the capacity and work time of the remote-controlled robotic device **2.** For example, it is no longer necessary to extract the remote-controlled robotic device **2** from its work area for the entire duration of the intervention, because it may be recharged close to its intervention site in the hazardous area, which affords a considerable savings of time and money. This is because, when intervention takes place in a contaminated area, extracting the robotic device requires decontaminating it. Likewise, extracting a robotic device intervening in a marine environment requires the implementation of expensive means.

Thus, this remote intervention system has a very strong advantage over a system that does not transport power, particularly in the event of an incident in a harsh environment, like a nuclear power plant. This is because, when a nuclear power plant is out of service, the installed transmission/reception antennas and electrical outlets are no longer powered, and therefore no longer operational. The shutdown of all of the nuclear power plant's functions means that power must be provided, so that the remote-controlled robotic devices **2** are not required to leave their work area to recharge. It is therefore crucial to restore emergency power to the telecommunication network. The battery life of this remote intervention system, encompassing the communication and power-providing functions, becomes critical in these circumstances. In this particular case, the need to create a wireless telecommunication cell **5** in each of the rooms or compartments of a nuclear power plant is due to the fact that the walls of a nuclear power plant are electromagnetically shielded, which is not true of an ordinary building in which a single antenna may suffice to cover all the space. It is therefore important to be able to provide a remote intervention system comprising wireless connections using multiplexed signals, making it possible both to increase the number of telecommunication cells **5** and to allow a remote-controlled robotic device **2** to travel from one cell **5** of the telecommunication network to another cell **5.** The telecommunication cell **5** may use MIMO technology (for "Multiple Input Multiple Output") or FEC technology (for "Forward Error Correction").

We shall now consider Figure 2, which schematically depicts a second preferential embodiment of the remote intervention system.

The control station **1** is linked to a relay module **20a** by a cable **21a** similar to the cable **4** of Figure 1, as previously described. In this embodiment, the relay module **20a** is itself connected to other relay modules **20b,..., 20i.** The relay modules **20a,..., 20i** are connected in series by means of cables **21b,..., 21i.**

Whenever the remote intervention system is moved, it is arranged in its stowed configuration. The relay modules **20a**,..., **20i** are collected close to one another, and the cables **21a**,..., **21i** are wound up.

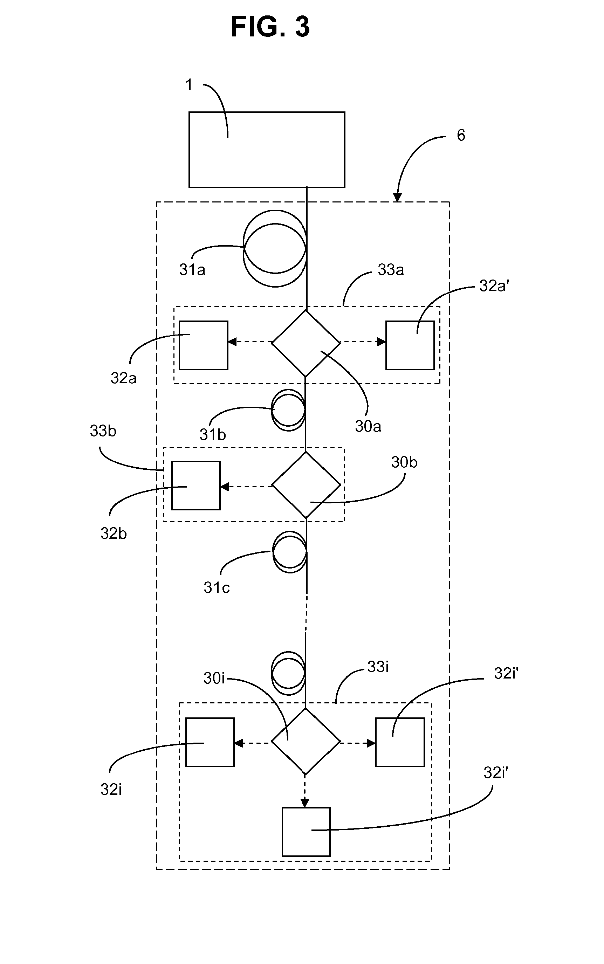

Whenever the intervention system is in its field of operation, it deploys to occupy the largest possible surface, as schematically depicted in the third embodiment in Figure 3. Each relay module **30a**,..., **30i** ensures the control of at least one remote-controlled robotic device, thereby forming a telecommunication cell **33a,..., 33i.** The remote intervention system therefore comprises as many telecommunication cells **33a,..., 33i** as relay modules **30a**,..., **30i.** A relay module **30a**,..., **30i** may control one or more remote-controlled robotic devices that are associated with it.

In the present situation, the intervention system comprises a control station **1** connected to relay modules **30a**,..., **30i** installed in series. The control station **1** is connected by a cable **31a** to a first relay module **30a** of a telecommunication cell **33a.** The telecommunication **cell 33a** further comprises two remote-controlled robotic devices **32a** and **32a**'. The first relay module **30a** is connected by means of a cable **31** b to a second relay module **30b** belonging to a telecommunication cell **33b** that comprises only one remote-controlled robotic device **32b.** A cable **31c** makes it possible to connect the relay module **30b** to the following relay modules in the same way. By way of example, a relay module **30i** is also depicted that controls a telecommunication cell **33i** comprising three remote-controlled robotic devices **32i, 32i'** and **32i".**

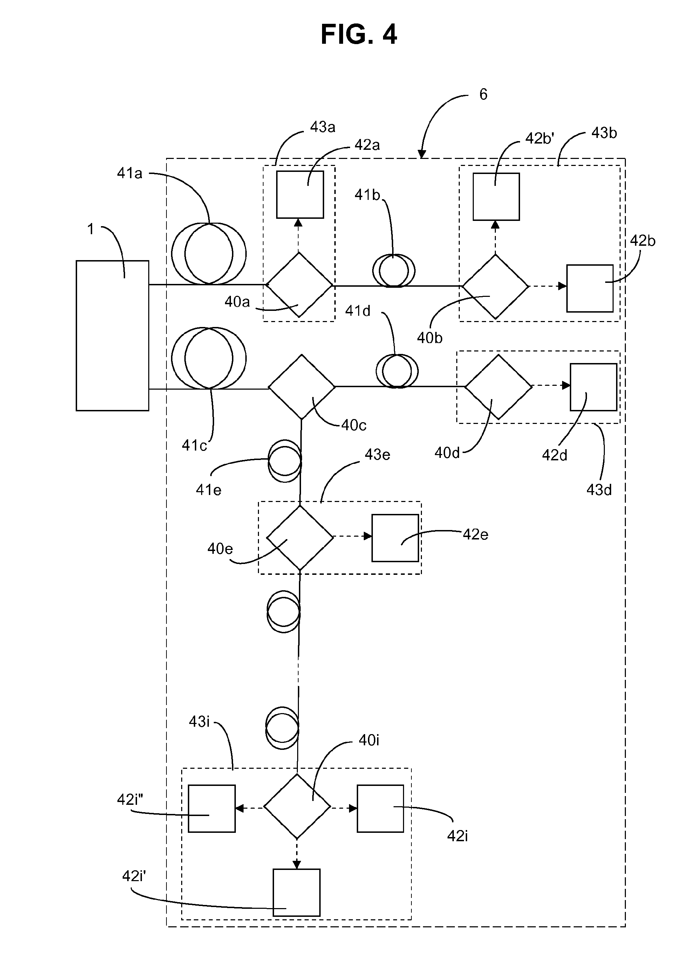

Figure 4 schematically depicts a fourth embodiment in a deployed configuration when the intervention system is operating. The intervention system comprises a control station **1** connected to relay modules **40a**,..., **40i** installed in parallel or in series. In this embodiment, the control station **1** is connected by a cable **41a** to a first relay module **40a** of a telecommunication cell **43a.** The telecommunication cell **43a** comprises only a single remote-controlled robotic device **42a.** The first relay module **40a** is connected by means of able **41** b to a second relay module **40b** belonging to a telecommunication cell **43b** that comprises two remote-controlled robotic devices **42a** and **42a'.** Additionally, the control station **1** is connected by a cable **41c** to a third relay module **40c** which is itself connected in parallel to two relay modules **40d** and **40e** belonging to the telecommunication cells **43d** and **43e** respectively. Each of the telecommunication cells **43d** and **43e** comprises a remote-controlled robotic device **42d** and **42e** respectively. Likewise, a relay module **40i** may be connected to the rest of the system.

The relay module **40i** belongs to a telecommunication cell **43i** that comprises three remote-controlled robotic devices **43i, 43i'** and **43i".**

It is understood that, combining serial and parallel circuits, the intervention system may deploy and cover a very large area. However, the remote-controlled robotic devices may recharge their batteries from the most accessible relay module, which reduces the power consumption required by that recharging and saves a great deal of time. It should also be noted that each remote-controlled robotic device may, as needed, disconnect from a telecommunication cell to reconnect to another one, for example if there are obstacles that do not permit high-quality wireless communication between the relay module and the remote-controlled robotic devices that it controls. For example, when intervening at remote ends of a single installation, it is necessary to coordinate the work done by the remote-controlled robotic devices. In the particular case where there is electromagnetic shielding between those two remote ends, it becomes necessary to operate at least two telecommunication cells in a team, each one having its own relay module and one or more associated remote-controlled robotic devices. During that work, some remote-controlled robotic devices may temporarily switch from one telecommunication cell to another.

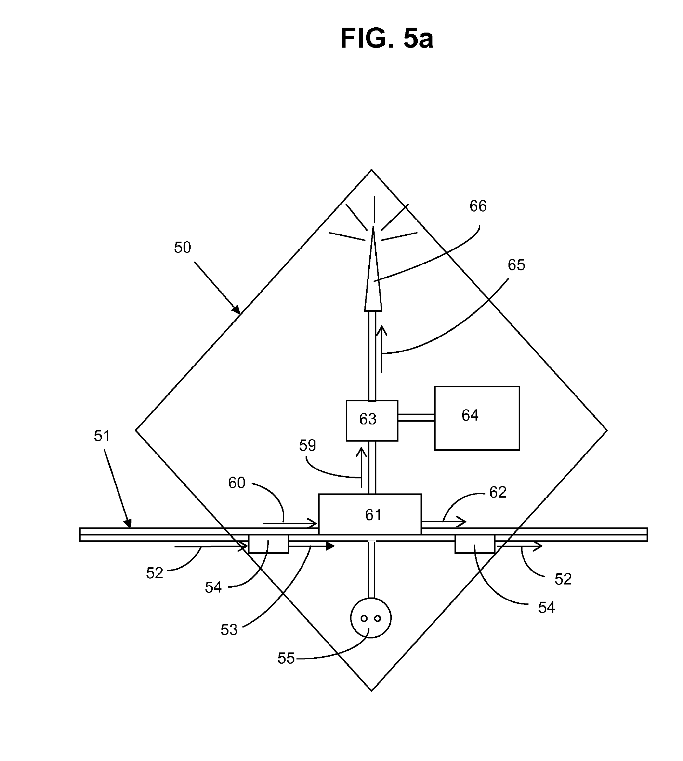

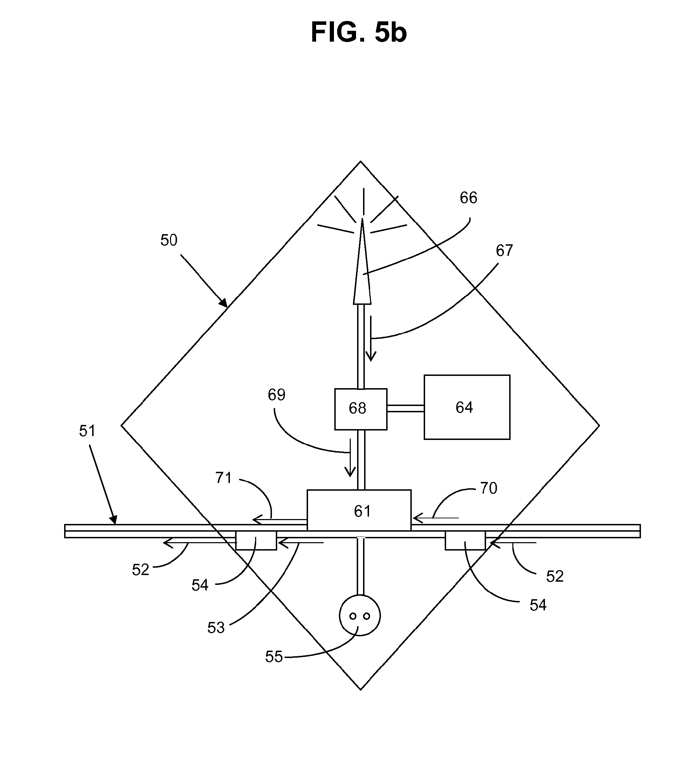

Figures 5a and 5b schematically depict a relay **module 50** belonging to a telecommunication cell. The cable **51** coming from the control station transports electrical power, circulating, for example, within the cable's **51** outer conductor(s) and intended to provide, through the relay module **50,** electrical power to the remote-controlled robotic devices controlled by the relay module **50** and belonging to the same telecommunication cell. The cable **51** transports, for example, high-voltage current **52,** which is converted into low- or medium- voltage current **53** by a transformer **54** placed at the input of the relay module **50** in order to make it possible to power all of the elements of the telecommunication cell, particularly by means of an electrical power outlet **55.** At the output of the relay module **50,** the low- or medium- voltage current **53** is again converted into high-voltage current **52** in order to power the next relay module. The high-voltage current that arrives in a relay module may be kept as high-voltage if it is intended to supply powerful remote-controlled robotic devices that need a lot of energy; the high-voltage current is converted into low- or medium-voltage current in order to power remote-controlled robotic devices that need less power.

The cable **51** coming from the control station also transports a wavelength division multiplexed (WDM) downlink optical signal **60** comprising the wavelengths λ**a**,..., λ**i** respectively associated with each of the telecommunication cells. As depicted in Figure 5a, the relay module **50** is, for example, traversed by a downlink multiplexed optical signal **60** coming from the control station. An optical add/drop multiplexer **61** extracts from the downlink multiplexed optical signal **60,** a downlink optical signal **59** with wavelength λ**a** related to the telecommunication cell controlled by the relay module **50.** The optical signal **62** comprising the remaining wavelengths λ**b**,..., λ**i**, related to the other telecommunication cells, traverses the relay module **50** moving towards the next telecommunication cells. A detector **63** extracts the useful data from the downlink optical signal **59** with wavelength λ**a**. Part of the data contained in that downlink optical signal 59 with wavelength λ**a** corresponds to the operation of the entire telecommunication cell: mobility of the relay module **50,** management of the power supply of the relay module **50,** management of the configuration of the telecommunication cell (connecting/disconnecting from the remote-controlled robotic devices), etc. This data is sent to a controller **64,** another part of the data pertains to the individual operation of each remote-controlled robotic device belonging to the telecommunication cell controlled by the relay module **50.** The downlink optical signal **59,** containing the data related to the individual operation of each remote-controlled robotic device, is converted into a radio signal **65** by the detector **63.** The radio signal **65** is then sent directly to an antenna **66** that transmits it to the remote-controlled robotic devices by radio. Although the preceding example was described for an extracted downlink optical signal **59** with wavelength λ**a**, it should be understood that the multiplexer **61** may extract from the downlink multiplexed optical signal **60** multiple downlink optical signals with different wavelengths. These downlink optical signals are all associated with the telecommunication cell controlled by the relay module **50** and each one relates to one of the remote-controlled robotic devices respectively, so as to increase the data transmission rate.

Data transmission in reverse is depicted in Figure 5b. The uplink radio signal **67** coming from the remote-controlled robotic devices associated with the relay module **50** is handled by an emitter **68** that adds return data coming from the controller **64** of the relay module **50.** The resulting radio signal is recoded and converted into an uplink optical signal **69** by the emitter **68,** and carried by a new wavelength λ'**a** assigned to the telecommunication cell controlled by the relay module **50.** The uplink optical signal **69** may comprise digital data, as well as video data. The uplink optical signal **69** with wavelength λ'**a** is added by the OADM multiplexer **61** to the uplink multiplexed optical signal **70** comprising the wavelengths λ'**b,...,** λ'**i** coming from other telecommunication cells located downstream. The uplink multiplexed optical signal **71,** resulting from the sum of the uplink optical signal **69** with wavelength λ'**a** and the uplink multiplexed optical signal **70,** travels towards the control station.

Two variants are possible. Either the wavelength λ**a** of the downlink optical signal **59** extracted from the downlink multiplexed optical signal **60** coming from the control station **1** is different from the wavelength λ'**a** of the uplink optical signal **69** inserted into the uplink multiplexed optical signal **70,** in which case there is no interaction between the downlink optical signal descendant **59** and the uplink optical signal **69.** The cable's distance may then achieve a length of 100km; or else the wavelength λ**a** of the downlink optical signal **59** extracted from the downlink multiplexed optical signal **60** coming from the control station **1** is the same as the wavelength λ'**a** of the uplink optical signal **69** inserted into the uplink multiplexed optical signal **70.** In such a case, there is an interaction between the downlink optical signal **59** and the uplink optical signal **69** (the Rayleigh effect) and the cable's length will be limited to 10-20km. What has just been explained as an example for wavelengths λ**a** and λ'**a** likewise applies to the wavelengths λ,**b,...,** λ**i** and λ'**b,...,** λ'**i.**

Although the preceding example was described for an inserted uplink optical signal **69** with wavelength λ'**a,** it should be understood that the multiplexer **61** may insert into the uplink multiplexed optical signal **70** multiple uplink optical signals that have different wavelengths, all associated with the telecommunication cell controlled by the relay module **50** so as to increase the data transmission rate.

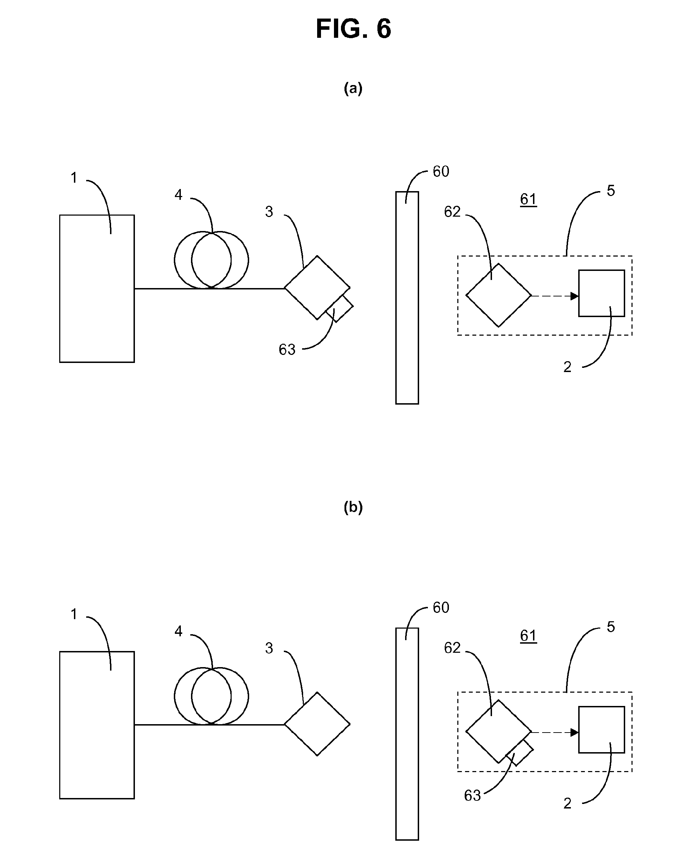

Figures 6a and 6b depict another embodiment of the remote intervention system in the particular case in which a wall **60** constitutes an electromagnetic shielding screen between the control station **1** and the work area **61** of the remote-controlled robotic devices **2,** which greatly disrupts a radio/wireless link. In the event that an intervention must take place in this sort of environment, no electrical power is available, and the transmission of orders to the remote-controlled robotic device **2** must take place through this wall **60.**

The remote intervention system comprises a control station **1** that is linked to a first relay module **3** placed on a first side of the wall **60.** A second relay module **62** is installed on the second opposite side of the wall **60,** within the work area **61.** This second relay module **62** is associated with one or more remote-controlled robotic devices **2.** However, the transmission of data over a radio/wireless link through a wall **60** constituting an electromagnetic shielding poses the problem of interference generated by reflections against the wall and the distortion of the radio signals. Furthermore, the second relay module **62** and the remote-controlled robotic device(s) **2** placed within the work area **61** need to be electrically powered in order to recharge their batteries.

The solution is given by a moving section **63,** capable of connecting to a relay module **3, 62.** First, that moving section **63** is connected to the first relay module **3** placed on a first side of the wall **60,** outside of the work area **61** (Fig.6a). The first relay module 3 transfers to the moving section **63,** which stores it, the power received from the control station **1** by the cable **4.** Second, the moving section **63** disconnects from the first relay module **3,** then enters the work area **61** by moving independently and will connect to the second relay module **62** placed on the opposite side of the wall **60,** within the work area **61** (Fig.6b). The moving section **63** transfers to the second relay module **62** the power that it had stored. The remote-controlled robotic device **2** may thereby recharge its batteries from the second relay module **60.** Naturally, other remote-controlled robotic devices that are present nearby may also recharge their batteries from the second relay module **60.** If the electrical capacity of the moving section 63 is no longer sufficient to power the relay module **62,** another moving section **63** whose batteries are fully charged may substitute for the moving section 63. A multitude of moving sections 63 may thereby be put into place. By constructing a multitude of moving sections **63** between the relay module **3,** placed on a first side of the wall **60,** and the relay module **62** placed on the opposite side of the wall **60,** within the work area **61,** the intervention time of the remote-controlled robotic devices **2** that is possible without leaving the work area **61,** which in theory is unlimited, may in practice range from several hours to several years.

The moving section **63,** capable of connecting to a relay module **3, 62,** may comprise both an electrical power function and a communication function. First, that moving section **63** is connected to the first relay module **3** placed on a first side of the wall **60,** outside of the work area **61** (Fig.6a). The first relay module **3** transfers to the moving section **63,** which stores it, data and power received from the control station **1** by the cable **4.** Second, the moving section **63** disconnects from the first relay module **3,** then enters the work area **61** by moving independently and will connect to the second relay module **62** placed on the opposite side of the wall **60,** within the work area **61** (Fig.6b). The moving section **63** transfers to the second relay module **62** the data received from the first relay module **3** and the power that it had stored. The second relay module **62** transmits to its corresponding remote-controlled robotic device **2** the received data concerning it. One of the roles of the moving section **63** is therefore to receive and transmit data in order to allow the continuity of data transmission between the control station **1** outside of the work area **61** and the remote-controlled robotic device **2** within the work area **61,** despite the presence of the wall **60** constituting an electromagnetic shielding. The mobility of this section has the benefit of avoiding exposing human beings to a hostile environment.

Naturally, the present invention is not limited to the described embodiments, but is, rather, subject to many variants accessible to the person skilled in the art without departing from the spirit of the invention. In particular, without departing from the scope of the invention, it is possible to increase the number of relay modules and number of remote-controlled robotic devices associated with them, and to alter and upgrade the configuration of the links between the control station, the relay modules and the remote-controlled robotic devices.

## Claims

1. A remote intervention system comprising a control station, at least one means of relaying and at least one remote-controlled robotic device, **characterized in that**
- the control station (1) is connected to the means of relaying (50) by at least one cable (51) transporting electrical power (52), a downlink multiplexed optical signal (60) and an uplink multiplexed optical signal (70),
- the means of relaying (50) comprises a means of extracting (61) at least one downlink optical signal (59) from the downlink multiplexed optical signal (60), a means of converting (63) said downlink optical signal (59) into a radio signal (65) and a means of transmitting (66) the radio signal (65) to the remote-controlled robotic device (2),
- the means of relaying (50) also comprises a means of receiving (68) at least one radio signal (67) from the remote-controlled robotic device (2), a means of converting the radio signal (67) into an uplink optical signal (69) and a means of inserting (61) the uplink optical signal (69) into an uplink multiplexed optical signal (70),
- the remote-controlled robotic device (2) comprises a means of transmitting/receiving at least one radio signal (65, 67) to the means of relaying (50).

2. A remote intervention system according to claim 1, wherein the means of relaying (50) comprises a means (55) suitable for allowing the electrical powering of a remote-controlled robotic device (2).

3. A remote intervention system according to one of the claims 1 and 2, wherein the wavelength of the extracted downlink optical signal (59) is the same as the wavelength of the inserted uplink optical signal (69).

4. A remote intervention system according to one of the claims 1 and 2, wherein the wavelength of the extracted downlink optical signal (59) is different from the wavelength of the inserted uplink optical signal (69).

5. A remote intervention system according to one of the preceding claims, wherein the means of relaying comprises a plurality of relay modules, each relay module controlling at least one remote-controlled robotic device.

6. A remote intervention system according to claim 5, wherein relay modules are connected in series.

7. A remote intervention system according to claim 5, wherein relay modules are connected in parallel.

8. A remote intervention system according to one of the claims 5 to 7, wherein the remote-controlled robotic device comprises a means for disconnecting from the relay module that controls it and a means for connecting to another relay module.

9. A remote intervention system according to one of the preceding claims, wherein the means of relaying is capable of coordinating tasks to be performed by a plurality of remote-controlled robotic devices.

10. A remote intervention system according to one of the claims 5 to 9, further comprising a moving section (63) capable of successfully connecting to a first relay module (3) in order to receive electrical power and to a second relay module (62) in order to transfer the received electrical power to it.

11. A remote intervention system according to claim 10, wherein the moving section (63) is further capable of successively connecting to a first relay module (3) in order to receive data and to a second relay module (62) in order to transfer the received data to it.

12. A remote intervention system according to one of the preceding claims, wherein the control station is connected to the means of relaying by at least one cable comprising at least one optical fiber capable of transporting an optical signal surrounded by at least one layer of a conductive material for transporting electrical power.
